(19) Europäisches Patentamt
European Patent Office
Office européen des brevets

(11) **EP 2 409 795 B1**

(12) **EUROPEAN PATENT SPECIFICATION**

(45) Date of publication and mention
of the grant of the patent:
**14.08.2019  Bulletin 2019/33**

(21) Application number: **09841838.7**

(22) Date of filing: **17.03.2009**

(51) Int Cl.:
*B22D 11/16* (2006.01)    *B22D 2/00* (2006.01)
*G01K 11/24* (2006.01)

(86) International application number:
**PCT/JP2009/055111**

(87) International publication number:
**WO 2010/106633 (23.09.2010 Gazette 2010/38)**

(54) **TEMPERATURE MEASURING METHOD AND DEVICE FOR CONTINUOUS-CASTING MOLD COPPER PLATE**

TEMPERATURMESSVERFAHREN UND  VORRICHTUNG FÜR EINE STRANGGUSSFORMKUPFERPLATTE

PROCÉDÉ DE MESURE DE TEMPÉRATURE ET DISPOSITIF POUR PLAQUE EN CUIVRE DE MOULE DE COULÉE CONTINUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**25.01.2012   Bulletin 2012/04**

(73) Proprietor: **Nippon Steel Corporation Tokyo 100-8071 (JP)**

(72) Inventors:
• **HONDA, Tatsuro**
**Osaka-shi**
**Osaka 541-0041 (JP)**
• **YAMANO, Masaki**
**Osaka-shi**
**Osaka 541-0041 (JP)**

• **MURAKAMI, Toshihiko**
**Osaka-shi**
**Osaka 541-0041 (JP)**
• **ADACHI, Manabu**
**Wakayama-shi**
**Wakayama 640-8555 (JP)**

(74) Representative: **J A Kemp**
**14 South Square**
**Gray's Inn**
**London WC1R 5JJ (GB)**

(56) References cited:
AT-B- 372 319          JP-A- 9 108 801
JP-A- S5 970 450       JP-A- S57 159 251
JP-A- S59 156 558      JP-A- 2002 113 562
JP-A- 2006 026 717     JP-A- 2006 026 717
JP-A- 2007 033 077     JP-A- 2007 033 077
JP-A- 2008 070 340     US-A- 5 951 163

**Description**

Technical Field

The present invention relates to a method and apparatus for measuring temperature of a mold copper plate that constitutes a mold for continuous casting of molten metal (such as molten steel). In particular, the present invention relates to a method and apparatus capable of measuring temperature of a mold copper plate over a wide range of temperature measurement area with accuracy and without impairing the productivity of continuous casting.

Background Art

Conventionally, a thermocouple is embedded in a mold copper plate of a continuous casting machine (CC) for use in a steel making process. The thermocouple is then used to measure the temperature of the mold copper plate for monitoring and control of the inside of mold. Specifically, the temperature measured by the thermocouple is utilized for predicting or sensing a breakout (BO) of molten steel in the mold, as well as for estimating the quality of cast piece. Moreover, the temperature measured by the thermocouple is also used as an indicator for controlling an electromagnetic stirring apparatus and an electromagnetic brake apparatus provided in the mold. In general, the thermocouple is placed in a hole provided in a mold copper plate (the hole opened on a surface opposing to an adjacent surface to molten steel of the mold copper plate, and extending in the mold copper plate) such that a temperature measurement point is positioned 5 to 20 mm away from a surface adjacent to molten metal of the mold copper plate.

As more of the thermocouples are placed, the temperature (temperature distribution) of the mold copper plate can be measured in more detail, which is advantageous. With more detailed measurement of the temperature of the mold copper plate, an expected effect is that a breakout of the molten steel can be predicted and sensed more reliably. Moreover, with more detailed measurement of the temperature of the mold copper plate, another expected effect is that as a result of improved accuracy of estimation of the flow condition of molten steel and the thickness of shell, the accuracy of estimation of the surface quality of cast piece is improved. However, a problem arises in that placing a large number of thermocouples may result in an increase in the failure frequency of the thermocouple. Particularly, in recent years, there are tendencies that the quality of a cast piece formed in the mold is controlled by an electromagnetic stirring apparatus and an electromagnetic brake apparatus, which are provided in the mold. As a result, since physical interference with these apparatuses occurs, the replacement and repair of a failed thermocouple have become extremely difficult.

For the purpose of solving the problems as described so far, for example, a method for temperature measurement of a mold copper plate as described in Patent Literature 1 (JP2002-113562A) is proposed. Specifically, Patent Literature 1 describes problems when measuring the temperature of a mold copper plate with a thermocouple, particularly when an electromagnetic stirring apparatus is provided. Patent Literature 1 describes, as a solution thereof, a method for measuring the temperature of a predetermined position inside a mold copper plate by providing an insertion hole that opens up on the top surface of the mold copper plate and extends in the mold copper plate, and inserting a thermocouple into the insertion hole.

Moreover, as a method for temperature measurement of the surface of die material by use of ultrasonic wave, a method described in Patent Literature 2 (JP2007-33077A) is proposed. To be specific, Patent Literature 2 describes a method for measuring the temperature of an adjacent surface (one side surface 2a shown in Figure 2 of Patent Literature 2) of the die material to molten steel, where temperature change is too rapid to measure by a thermocouple whose response is slow, by using ultrasonic wave. To be more specific, Patent Literature 2 describes that a hole for ultrasonic wave reflection whose bottom face is flat is formed on the above described adjacent surface, and a propagation time difference between ultrasonic echoes that are respectively reflected at the above described adjacent surface and the bottom surface of the above described hole is measured. Then, Patent Literature 2 describes a method for determining a propagation speed of ultrasonic wave from the above described measured propagation time difference and the distance between the adjacent surface and the bottom surface of the hole, and determining the temperature of the adjacent surface from the predetermined temperature dependence of the propagation speed of ultrasonic wave in the die material.

Disclosure of the Invention

(1) Problems of failure of thermocouple and its interference with other equipment

As described above, conventionally, the temperature of a mold copper plate of a continuous casting machine is measured by using a thermocouple that is inserted into the mold copper plate from its back surface (the surface opposing to an adjacent surface to the molten steel of the mold copper plate). However, as described in

Patent Literature 1 as well, the position at which the thermocouple is attached is adjoining to a path of mold cooling water, and the mold is constantly exposed to vibration which is so-called an oscillation. For this reason, the protection tube of the thermocouple may be corroded by the cooling water, and the cooling water may intrude into the insertion hole for thermocouple causing a significant error in measured temperature.

Moreover, since as described above, equipment such as an electromagnetic stirring apparatus and an electromagnetic brake apparatus is provided adjacent to the back surface of the mold copper plate in recent years, these equipment physically interferes with the thermocouple and the wiring thereof. Because of this, when replacing a failed thermocouple, it takes time and effort to detach equipment such as the electromagnetic stirring apparatus and the electromagnetic brake apparatus, during which the continuous casting needs to be stopped for long hours, thereby significantly impairing the productivity.

Thus, in a conventional method for temperature measurement of a mold copper plate by use of a thermocouple, there is a problem in that the thermocouple may output an abnormal value caused by a corrosion of the thermocouple and the intrusion of cooling water to temperature measurement points. Moreover, it is also a problem that equipment such as an electromagnetic stirring apparatus and an electromagnetic brake apparatus has become to be used, thereby making the replacement of a failed thermocouple difficult.

(2) Problems of thermocouple

The temperature measurement by use of a thermocouple is limited to the measurement of local temperature in the vicinity of the front edge portion of the thermocouple. As described above, it is general that the thermocouple is disposed such that the temperature measurement point is located 5 to 20 mm away from a surface adjacent to molten steel of the mold copper plate. Because of this, a temperature measured by the thermocouple only represents the temperature of an area within several tens of mm in the vicinity of the above described temperature measurement point.

On one hand, when the mold copper plate has a form of flat plate, the adjacent surface thereof with molten steel may have, for example, an area of about 900 mm × 2000 mm. Because of this, to measure the temperature of the entire adjacent surface in full detail with thermocouple, an extremely large number of thermocouples are needed, which is substantially impossible to realize, and therefore, in reality, the number of the thermocouples to be used is restricted to a practical number. For example, in the example described in Patent Literature 1, there are about 26 temperature measurement points in one adjacent surface to the molten steel of the mold copper plate.

(3) Problems with the method described in Patent Literature 1

Problems with the method described in Patent Literature 1 include, besides the problems described in (2) described above, that there is limitation on the position in the height direction to place thermocouples. In general, as the thermocouple, a sheath thermocouple having an outer shape of a diameter of about 3 to 5 mm is used in the viewpoint of required mechanical properties, corrosion resistance, responsiveness, and the like. To sink this thermocouple inside the mold copper plate, it is necessary to make a thin and deep insertion hole with accuracy by using a drill etc. as shown in Figure 1 of Patent Literature 1.

However, it is difficult to make a deep insertion hole having a small diameter as described above. At least inferring from the specification of a commercially available carbide drill etc., a depth of at most about 50 mm to 60 mm is considered to be the limit when an insertion hole having a diameter of about 3 mm is made in the mold copper plate. As shown in Figure 1 of Patent Literature 1, even when making an insertion hole which is slightly larger than the thermocouple from an upper surface of the mold copper plate, making an excessively large insertion hole will impair the heat conduction of the mold copper plate and therefore is not desirable. For this reason, for example, if an insertion hole having a diameter of 6 mm is to be made, a depth of about 90 mm is considered to be the limit. In other words, the temperature measurement point of the thermocouple to be inserted into this insertion hole is limited to a position higher than the position about 90 mm downwardly away from the upper surface of the mold copper plate.

In general, since stable measured temperature values cannot be obtained at the surface of molten steel due to ruffling of the molten steel surface, the temperature measurement area is considered to include a position about several cm to 10 cm receded from the molten steel surface and positions therebelow. For this reason, when for example a temperature measurement point is provided at a position 90 mm away from the upper surface of the mold copper plate, the surface of molten steel will be higher than that position by at least several cm and therefore, there is more risk that the molten steel overflows from the mold when the molten steel surface slightly fluctuates or when it is in an unsteady state. Moreover, the temperature measurement point is limited to a position higher than the position about 90 mm downwardly away from the upper surface of the mold copper plate. For this reason, it is unable to measure temperature at a position further downward from the position 90 mm away from the upper surface of the mold copper plate, which may be insufficient to sense a breakout of molten steel in the mold.

As so far described, there are following problems with the method described in Patent Literature 1.

(a) It is difficult to make an insertion hole having an appropriate depth, and the feasibility of the method is low.

(b) The temperature measurement point is limited to within a range of up to about 90 mm downward from the upper surface of the mold copper plate. As a result, problems arise in that there is a risk of overflowing of molten steel, and that it is not possible to sense a breakout of molten steel at a position below the temperature measurement point.

(4) Problems with the method described in Patent Literature 2

The method described in Patent Literature 2 requires that a flat-bottomed hole having a diameter of about 1 mm and a depth of about 1 mm to 2 mm is formed on an adjacent surface of the die material to molten steel (paragraph 0025 of Patent Literature 2). When this method is applied to a mold copper plate for continuous casting, the above described flat-bottomed hole will be provided on the adjacent surface to molten steel of the mold copper plate. As a result, there are concerns that the heat transfer from the molten steel to the mold copper plate in the portion where the above described flat-bottomed hole is formed is different from in the surrounding portions, and that a lubricant, called powder intrudes into the above described flat-bottomed hole thereby forming a protruding part, or a part of the steel intrudes thereinto. These may cause the occurrence of a flaw in the cast piece and an increase in the risk of occurrence of breakout of the molten steel. In addition, since the depth of the flat-bottomed hole is about 1 to 2 mm, the propagation time difference (propagation time difference in a round trip) between ultrasonic echoes reflected at the bottom surface of the flat-bottomed hole and the adjacent surface to molten steel will be about 0.02 nsec, and it is necessary to detect a minute change in the time difference by temperature. For that purpose, a detection technique with very-high time resolution/accuracy is required, thereby causing an unreasonably high cost of the apparatuses. Moreover, the ultrasonic echo from the flat-bottomed hole and the ultrasonic echo from the adjacent surface to molten steel are likely to interfere with each other and, in order to suppress this, a high-frequency ultrasonic wave is required. However, a higher-frequency ultrasonic wave is more difficult to propagate, and therefore is disadvantageous for performing measurement over a wide range. From viewpoints described above, the method described in Patent Literature 2 is intended for use in the estimation of heat conductivity etc. of a mold releasing agent applied to the surface of dies to be used in castings other than continuous casting, and it is difficult to apply the method to the temperature measurement of the mold copper plate for continuous casting.

Moreover, even if the method described in Patent Literature 2 can be applied to the temperature measurement of a mold copper plate for continuous casting, a measured temperature value of only one point (strictly, an average temperature of the range of a depth of approximately 1 to 2 mm from the adjacent surface) in an adjacent surface to the molten steel of the mold copper plate is obtained. Moreover, in order to cause an ultrasonic wave to be normally incident to the above described adjacent surface, an ultrasonic sensor needs to be attached to a surface opposing to the above described adjacent surface. As described so far, the attachment position is adjoining to the path of mold cooling water, and there is a possibility that the ultrasonic sensor fails due to water leakage etc. Further, because of the physical interference with an electromagnetic stirring apparatus, an electromagnetic brake apparatus, and incidental equipment thereof, the attachment of the ultrasonic sensor is difficult, and the replacement thereof at the time of failure is also difficult. Replacing the ultrasonic sensor will significantly impair the productivity, such as by causing the continuous casting to be stopped for long hours.

As described so far, the method described in Patent Literature 2 has the following problems.

(a) Since there is a risk of the occurrence of a flaw in the cast piece, and the like, it is difficult to apply the concerned method to temperature measurement of a mold copper plate for continuous casting.
(b) Even if the method can be applied to it, a measured temperature value of only one point in the adjacent surface to molten steel of the mold copper plate can be obtained, and furthermore the replacement of a failed ultrasonic sensor is difficult since equipment such as the electromagnetic stirring apparatus and the electromagnetic brake apparatus physically interferes with the ultrasonic sensor.
(c) A detection apparatus with a very-high time resolution is required, thereby causing an unreasonably high cost.

The present invention has been made to solve the above described problems of conventional arts, and its object is to provide a method and apparatus capable of measuring temperature of a mold copper plate that constitutes a mold for continuous casting of molten metal, over a wide range of temperature measurement area with accuracy and without impairing the productivity of continuous casting.

To achieve the object, the present invention provides a method for measuring temperature of a mold copper plate which constitutes a continuous casting mold for molten metal, the method comprising: a first procedure of providing a reflection source of ultrasonic wave inside the mold copper plate; a second procedure of causing an ultrasonic wave to propagate in a direction in parallel with an adjacent surface to molten metal of the mold copper plate from an ultrasonic transceiver element toward the reflection source; and a third procedure of calculating a temperature of the mold copper plate based on an ultrasonic echo that is reflected at the reflection source and is detected by the ultrasonic transceiver element.

According to the invention, since the temperature of the mold copper plate is calculated based on an ultrasonic echo reflected at a reflection source provided inside the mold copper plate (specifically based on, for example, the propagation time of an ultrasonic echo and the temperature dependence (correspondence between the propagation speed and temperature) of the propagation speed of ultrasonic wave), it is possible to measure temperatures (average temperature) of the mold copper plate everywhere in a propagation path of ultrasonic wave at a time. In other words, compared with that conventionally the temperature measurement is possible only at substantially one temperature measurement point per one thermocouple or one ultrasonic transceiver element, it is now possible to measure temperatures of the mold copper plate over a wide range of temperature measurement area by one ultrasonic transceiver element.

Moreover, since the ultrasonic wave is caused to propagate in the direction parallel with the adjacent surface to molten metal of the mold copper plate, there is no need of attaching the ultrasonic transceiver element to a surface opposing to the adjacent surface. That is, the ultrasonic transceiver element may be attached to any of the upper surface, bottom surface, and side surface of the mold copper plate excepting the adjacent surface and a surface opposing to the adjacent surface. Therefore, the ultrasonic transceiver element may be disposed separated from the path of mold cooling water, and it is possible to reduce failures of the ultrasonic transceiver element and the occurrence of measurement errors due to water leakage. Moreover, it is less likely that the ultrasonic transceiver element physically interferes with equipment such as an electromagnetic stirring apparatus and an electromagnetic brake apparatus, and when the ultrasonic transceiver element fails, it can be replaced with relative ease, without impairing the productivity of continuous casting.

As so far described, according to the method for temperature measurement of a mold copper plate for continuous casting relating to the present invention, it is possible to measure temperature of the mold copper plate over a wide range of temperature measurement area with accuracy and without impairing the productivity of continuous casting.

Preferably, the reflection source provided in the first procedure is a hole that opens up on a surface opposing to an adjacent surface to the molten metal of the mold copper plate and extends in the mold copper plate.

According to such preferable method, it is possible to provide a reflection source with relative ease, and in addition to that, it is also possible to convert an existing thermocouple insertion hole for use as a reflection source.

Moreover, even if mold cooling water intrudes from an opening into the hole, the intensity of the ultrasonic echo that is reflected at the reflection source will not significantly change compared with before the intrusion of cooling water. In addition to that, since the temperature is measured based on the propagation time, not on the intensity of the ultrasonic echo reflected at the reflection source, the effect of the intrusion of cooling water is insignificant. To further reduce the effect of the intrusion of cooling water, the hole may be filled with resin or may be capped.

Further, the hole is opened not on the adjacent surface to molten metal, but on the surface opposing to the adjacent surface. As a result, it becomes possible to prevent the heat transfer from the molten metal to the mold copper plate from varying locally due to the hole, and a part of molten metal from entering into the hole, and to achieve the effect of reducing the risks that flaw occurs in the cast piece and a breakout of molten metal occurs.

Preferably, in the first procedure, a plurality of the reflection sources are provided in a propagation path of an ultrasonic wave that is transmitted from one or a pair of ultrasonic transceiver elements; and in the third procedure, a temperature of a section of the mold copper plate between an arbitrarily selected pair of reflection sources among the plurality of the reflection sources is calculated based on a propagation time difference between ultrasonic echoes that are respectively reflected at the selected pair of reflection sources and on a temperature dependence of a propagation speed of ultrasonic wave.

According to such preferred method, since a plurality of reflection sources are provided in the propagation path of ultrasonic wave, and the temperature of the mold copper plate is calculated based on the propagation time difference between ultrasonic echoes that are respectively reflected at an arbitrarily selected pair of reflection sources, it is possible to increase the space resolution of temperature measurement, and enhance the sensitivity on the local temperature variation.

Moreover, since the number of temperature measurement points per one ultrasonic transceiver element increases, the method also has an advantage in that the cost of the apparatus needed for measurement can be reduced.

Furthermore, even in a case of an ultrasonic transceiver element (a pair of ultrasonic transmitter and receiver elements) in which the ultrasonic transmitter element and the ultrasonic receiver element are made up of separate elements, it is possible to achieve similar effects by providing a plurality of reflection sources in the propagation path of ultrasonic wave relating to those ultrasonic transmitter element and the ultrasonic receiver element.

For example, in the second procedure, an ultrasonic transceiver element may be disposed on an upper surface of the mold copper plate.

When the ultrasonic transceiver element is disposed on the upper surface of the mold copper plate, there may be strong heat radiation from a tundish nozzle which is disposed above the mold. Therefore, if the ultrasonic transceiver element is disposed as-is on the upper surface of the mold copper plate, it will be exposed to high temperature, causing a risk of the occurrence of failures and measurement errors. For this reason, it is preferable to cool (including to insulate) the ultrasonic transceiver element to be disposed on the upper surface of the mold copper plate.

To achieve the object, the present invention also provides an apparatus for measuring temperature of a mold copper plate which constitutes a continuous casting mold for molten metal, the mold copper plate being provided with an ultrasonic reflection source therein, the apparatus comprising: an ultrasonic transceiver element that causes an ultrasonic wave to propagate in a direction in parallel with an adjacent surface to molten metal of the mold copper plate toward the reflection source; and computing device for calculating a temperature of the mold copper plate based on a propagation time of an ultrasonic echo that is reflected at the reflection source and is detected by the ultrasonic transceiver element and on a temperature dependence of a propagation speed of ultrasonic wave.

According to the method and apparatus for temperature measurement of a mold copper plate for continuous casting relating to the present invention, it is possible to measure the temperature of the mold copper plate over a wide range of temperature measurement area with accuracy and without impairing the productivity of continuous casting.

Brief Description of the Drawings

Figure 1 is a sectional view to illustrate the principle of the method for temperature measurement of a mold copper plate for continuous casting relating to the present invention.

Figures 2 (Figure 2A, 2B and 2C) are diagrams to schematically show a configuration example of the apparatus for carrying out the method for temperature measurement of a mold copper plate for continuous casting relating to the present invention. Figure 2A is a diagram to represent an outline configuration of the entire apparatus, Figure 2B is a plan view to show the vicinity of the ultrasonic transceiver element in an internally transmissive state, and Figure 2C is a sectional view taken along A-A as shown by an arrow in Figure 2B.

Figure 3 shows an example of an ultrasonic echo when an ultrasonic wave is made incident from the upper surface of the mold copper plate for continuous casting which was used in actual operation.

Figure 4 shows an example of an ultrasonic echo reflected at a slit hole provided inside a mold copper plate;

Figure 5 is a sectional view to illustrate the outline of a test relating to an embodiment of the present invention;

Figure 6 shows an example of an ultrasonic echo reflected at a thermocouple insertion hole as the reflection source, which is obtained in the test shown in Figure 5;

Figure 7 shows an example of an ultrasonic echo (a bottom surface echo) reflected at a bottom surface of the mold copper plate, which is obtained in the test shown in Figure 5; and

Figure 8 is a graph to show an example of respective average temperatures calculated at a computing section included in a computing control unit, and temperatures measured by a first and a second thermocouples, which are obtained in the test shown in Figure 5.

Best Mode for Carrying Out the Invention

Hereafter, one embodiment of the present invention will be described referring to the appended drawings as appropriate.

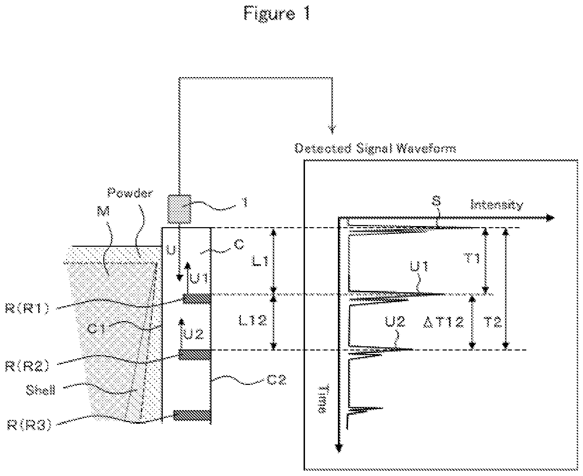

Figure 1 is a sectional view to illustrate the principle of the method for temperature measurement of a mold copper plate for continuous casting relating to the present invention. As shown in Figure 1, the method for temperature measurement relating to the present invention is a method for measuring temperature of a mold copper plate C which constitutes a mold for continuous casting of molten metal M. It is noted that while the mold copper plate C will have a flat plate shape when the mold for continuous casting has a rectangular tube shape, and the mold copper plate C will have a circular tube shape when the mold for continuous casting has a circular tube shape, the method for temperature measurement relating to the present invention can be applicable to either case. Hereafter, description will be made taking an example of a case where the molten metal M is molten steel, the mold for continuous casting has a rectangular tube shape, and the mold copper plate C has a flat plate shape.

As shown in Figure 1, a method for temperature measurement relating to the present invention includes a first procedure of providing a reflection source R of ultrasonic wave inside the mold copper plate C, a second procedure of causing an ultrasonic wave U to propagate in a direction substantially in parallel with an adjacent surface C1 with molten steel M of the mold copper plate C from an ultrasonic transceiver element 1 toward the reflection source R, and a third procedure of calculating a temperature of the mold copper plate C based on the propagation time of an ultrasonic echo reflected at the reflection source R and detected by the ultrasonic transceiver element 1, and a temperature dependence (correspondence between the propagation speed and temperature) of the propagation speed of ultrasonic wave.

To be specific, for example, based on a propagation time T1 of an ultrasonic echo U1 reflected at the reflection source R1 and detected by the ultrasonic transceiver element 1, and the distance L1 from the incident point of ultrasonic wave to the reflection source R1, the propagation speed of ultrasonic wave is determined by the following Equation (1).

$$\text{Propagation speed of ultrasonic wave} = (\text{distance L1 to reflection source R1})$$

$$\times\ 2/\text{propagation time T1} \qquad (1)$$

Then, based on this propagation speed and the predetermined temperature dependence of the propagation speed of ultrasonic wave in the mold copper plate C, it is possible to calculate the temperature of the mold copper plate C. This calculated temperature corresponds to an average temperature of a section from the incident point of ultrasonic wave (the upper surface of the mold copper plate in the example shown in Figure 1) to the reflection source R1.

Moreover, as shown in Figure 1, providing a plurality of reflection sources R (a plurality of reflection sources R1, R2 and R3 in the example shown in Figure 1) in the propagation path of the ultrasonic wave U transmitted from one ultrasonic transceiver element 1 enables that based on the propagation time difference between ultrasonic echoes that are respectively reflected by an arbitrarily selected pair of reflection sources among the plurality of reflection sources R (R1, R2, R3) and on the temperature dependence of the propagation speed of ultrasonic wave, an average temperature of the mold copper plate C in a section between the selected pair of reflection sources R is calculated.

To be specific, for example, a pair of reflection sources R1 and R2 are selected, and based on the difference $\Delta T12$ (= T2 - T1) between the propagation time T2 of an ultrasonic echo U2 reflected at the reflection source R2, and the propagation time T1 of an ultrasonic echo U1 reflected at the reflection source R1, and a distance L12 between the reflection sources R1 and R2, the propagation speed of ultrasonic wave is determined by the following Equation (2).

$$\text{Propagation speed of ultrasonic wave} =$$

$$(\text{distance L12 between reflection sources R1 and R2}) \times 2/\text{propagation time}$$

$$\text{difference } \Delta T12 \qquad (2)$$

Then, based on this propagation speed and a predetermined temperature dependence of the propagation speed of ultrasonic wave in the mold copper plate C, the temperature of the mold copper plate C can be calculated. The calculated temperature corresponds to an average temperature of a section between reflection sources R1 and R2.

It is noted that the temperature dependence of the propagation speed of ultrasonic wave in the mold copper plate C can be determined by using, for example, a sample made up of the mold copper plate C or a similar material to the mold copper plate C, and having a small size. To be specific, for example, a reflection source R is provided at a position a predetermined short distance (for example, about 100 mm) away from the end surface of the mold copper plate C or the sample, and the section from the end surface to this reflection source R is heated. Then, an ultrasonic wave is made incident from an ultrasonic transceiver element placed on the above described end surface, and an elapsing time from a time when a top surface echo reflected at the above described end surface to a time when an ultrasonic echo reflected at the reflection source R is detected is measured. This elapsing time is assumed to be the propagation time of the ultrasonic echo reflected at the reflection source R. Next, based on the measured propagation time and the propagation distance of ultrasonic wave, the propagation speed of ultrasonic wave is calculated, and based on the propagation speed and the measured temperature values, the temperature dependence (correspondence between the propagation speed and temperature) of the propagation speed of ultrasonic wave can be calculated. When, for example, the reflection source R is a hole as described below, the above described measured temperature value can be measured by a thermocouple attached to the inside of the hole. When the reflection source R is provided at a short distance from the incident point of ultrasonic wave (end surface) as described above, it is possible to determine the machining position of the reflection source R with relatively high accuracy, and therefore it is also possible to accurately determine the propagation distance of ultrasonic wave which serves as a reference when calculating the propagation speed of ultrasonic wave. As a result, it is also possible to calculate the temperature dependence of the propagation speed of ultrasonic wave with accuracy.

As shown in Figure 1, the reflection source R is preferably a hole that opens up on a surface C2 opposing to an adjacent surface C1 with molten steel M of the mold copper plate C, and extends in the mold copper plate C. Although it is said that ultrasonic wave is reflected if a gap of several tens of nm is present, whether or not an ultrasonic echo that is reflected at the reflection source R can be detected depends on the area of the reflection source R (the area in the direction normal to the propagation direction of ultrasonic wave), the attenuation of ultrasonic wave inside the mold copper plate C, noise echoes from other reflection sources (for example, an ultrasonic echo that is reflected at a groove as the path of mold cooling water), and so on. As the above described hole, it is preferable to adopt, for example, a drill hole having a diameter of about 1 mm to 5 mm, and a slit hole having a gap of about 0.3 mm to 1 mm, a width of about 0.3 mm to 10 mm, and a length of about several mm to several tens mm.

The above described hole is, as described above, a hole that opens up on the surface C2 opposing to the adjacent surface C1 with the molten steel M of the mold copper plate C, and extends in the mold copper plate C. It is general that the thickness of the mold copper plate C is about 35 mm to 45 mm, and a groove as the path for mold cooling water is provided in the opposing surface C2. Supposing that the groove has a depth of, for example, about 20 mm, the depth of the above described hole needs to be larger than the depth of the groove. For this reason, as the above described hole, for example, an thermocouple insertion hole which has conventionally been used can be converted for this purpose, or a hole having a similar size to that of the thermocouple insertion hole may be newly formed. Moreover, when a slit hole that is formed by electrical discharge machining is used as the above described hole, it is possible to position the bottom portion of the hole closer to the adjacent surface C1 than in the case of the thermocouple insertion hole. That is because the volume of the hole can be made sufficiently smaller than that of the thermocouple insertion hole (having a diameter of about 3 mm to 4 mm), and the heat transfer of the mold copper plate C is not likely to be impaired. In general, the bottom portion of the thermocouple insertion hole having a diameter of about 3 mm to 4 mm is located at least about 5 mm away from the adjacent surface C1. In contrast to this, in the case of a slit hole having a gap of about 0.5 mm and a width of about 3 mm, it is considered to be possible to position the bottom portion thereof as close as about 2 to 3 mm to the adjacent surface C1. Thus, by positioning the bottom portion of the hole closer to the adjacent surface C1 with the molten steel M of the mold copper plate C and disposing the ultrasonic transceiver element 1 such that an ultrasonic wave propagates toward the vicinity of the concerned bottom portion, it becomes possible to achieve the advantage that the sensitivity for temperature variation of the molten steel M and the shell (the outer shell portion of the steel that has been solidified in the mold) is enhanced.

The hole as the reflection source R is not limited to one having a hollow interior, and may be filled with the same material with the mold copper plate C or a different material therefrom. For example, the above described hole may be filled with metal other than copper, or with resin. When filling with metal, a slight (about several tens nm) gap may be provided between the inner surface of the hole and the filling material. Moreover, when filling with resin, it is preferable to select a resin that has a thermal resistance in consideration of the temperature of the part to be filled with the resin. By filling the inside of the hole with these filling materials, it is possible to suppress the intrusion of the mold cooling water.

It is noted that, as described later, when the reflection source R is provided at a position 100 mm from the end surface of the mold copper plate C, if the average temperature of the section from the end surface to the reflection source R changes by 1 °C (or when two reflection sources R are provided at an interval of 100 mm, and if the average temperature of the section between the two reflection sources R changes by 1 °C), the (round-trip propagation) time for ultrasonic wave to propagate between the end surface and the reflection source R (or between the two reflection sources R) will change by about 5 nsec. On one hand, the distance that ultrasonic wave propagates during the time period of 5 nsec is about 10 $\mu$m. That is, in order to obtain a temperature measurement accuracy of 1 °C, it is necessary to know the distance from the end surface to the reflection source R (or the distance between the two reflection sources R) at an accuracy of 10 $\mu$m.

To know the distance from the end surface to the reflection source R (or the distance between the two reflection sources R), there are two methods. One is a method for determining the machining position of the reflection source R with high accuracy, and the other is a method for precisely measuring the position of the reflection source R that has been machined. The former method has a problem in that if the above described accuracy is required for all the reflection sources R provided in the mold copper plate C having a large area of about 900 mm $\times$ 2000 mm, the cost will increase. On the other hand, the latter method has the advantage that the reflection source R may be machined at a machining accuracy of about several hundreds $\mu$m, or at a lower machining accuracy than that.

To be specific, after the ultrasonic transceiver element 1 is placed on the end surface of the mold copper plate C, the propagation time of the ultrasonic echo from the reflection source R is detected by the ultrasonic transceiver element 1 at a reference temperature, and from the detected propagation time and the propagation speed of the ultrasonic wave at the reference temperature obtained based on the predetermined temperature dependence of the propagation speed of ultrasonic wave, it is possible to conversely determine the distance L1 to the reflection source R or the distance L12 between the reflection sources R by using Equation (1) and Equation (2) described above. In this method, it is possible to determine the distance L1 to the reflection source R or the distance L12 between the reflection sources R with relatively low cost and with high accuracy.

It is noted that the above described reference temperature may be any temperature provided it is easy to manage the mold copper plate C to be at a fixed temperature. In general, the reference temperature may be set up as a constant temperature state, or a state in which the mold copper plate C is insulated from heat at near room temperature and the overall temperature of the mold copper plate C is stabilized. The method for implementing the reference temperature may be another method provided that it is reproducible as a state which is regarded as a thermal equilibrium, or as a state which can be regarded as a steady state in terms of temperature, or it can estimate the temperature state with high accuracy by calculation, etc.

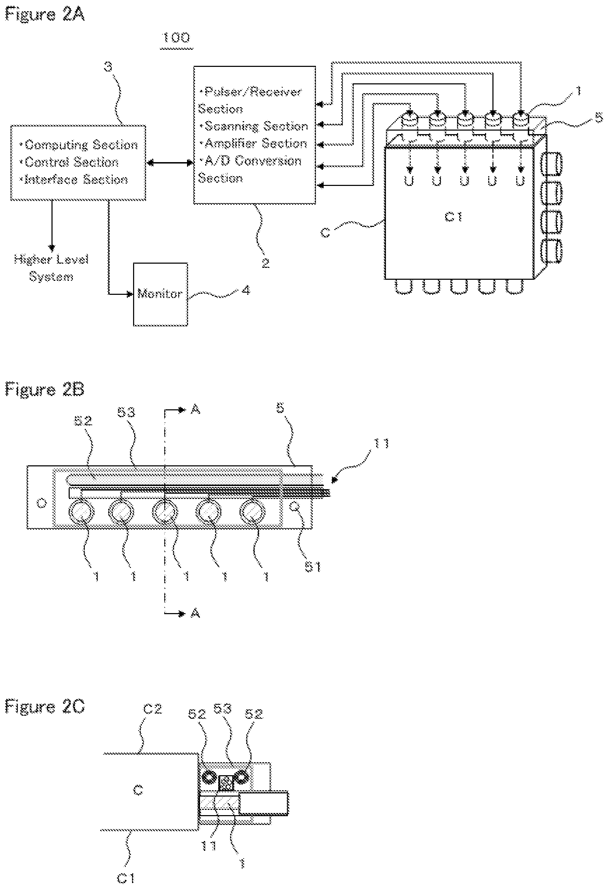

Figure 2 is a diagram to schematically show a configuration example of the apparatus for carrying out the method for temperature measurement of a mold copper plate for continuous casting relating to the present invention. Figure 2A is a diagram to represent an outline configuration of the entire apparatus, Figure 2B is a plan view to show the vicinity of the ultrasonic transceiver element in an internally transmissive state, and Figure 2C is a sectional view taken along A-A as shown by an arrow in Figure 2B. As shown in Figure 2, an apparatus for temperature measurement of a mold copper plate for continuous casting (hereafter, appropriately abbreviated as a "temperature measurement apparatus") 100 relating to the present invention includes an ultrasonic transceiver element 1 that causes an ultrasonic wave U to propagate in a direction substantially parallel with an adjacent surface C1 with molten steel M of the mold copper plate C toward the above described reflection source R (not shown in Figure 2), and computing device that calculates a temperature of the mold copper plate C based on the propagation time of the ultrasonic echo reflected at the reflection source R and detected by the ultrasonic transceiver element 1, and the temperature dependence of the propagation speed of ultrasonic wave.

Moreover, as shown in Figure 2, the temperature measurement apparatus 100 relating to the present embodiment includes a transmission/reception control unit 2 for controlling the transmission/reception of ultrasonic wave U by the ultrasonic transceiver element 1, a computing control unit 3 for controlling the driving of the transmission/reception control unit 2 and performing the computation of an output signal from the transmission/reception control unit 2, and a monitor 4 for displaying a signal waveform and a computation result. In the present embodiment, a computing section included in the computing control unit 3 achieves the function as the above described computing device.

The ultrasonic transceiver element 1 relating to the present embodiment is disposed on the upper surface of the mold copper plate C, and may be subjected to a strong heat radiation from a tundish disposed above the mold. Therefore, if the ultrasonic transceiver element 1 is disposed on the upper surface of the mold copper plate C as-is, it will be exposed to high temperature, causing a risk of the occurrence of failures and temperature measurement errors. Because of this, the temperature measurement apparatus 100 relating to the present embodiment includes, as a preferable configuration, a protective cover 5 for cooling the ultrasonic transceiver element 1. The protective cover 5 is provided with a bolt hole 51, and the protective cover 5 is fixed to the upper surface of the mold copper plate C by a bolt (not shown) inserted through the bolt hole 51. As a result, the ultrasonic transceiver element 1 attached to the protective cover 5 is disposed on the upper surface of the mold copper plate C in a stable sate. A cooling pipe 52 and a heat-insulating material 53 are accommodated in the protective cover 5, and the ultrasonic transceiver element 1 and its signal cable 11 are positioned adjacent to the cooling pipe 52 and are enclosed by the heat-insulating material 53. As a result, even if the ultrasonic transceiver element 1 is disposed on the upper surface of the mold copper plate C, the ultrasonic transceiver element 1 will not be exposed to high temperature, and it is possible to reduce the risk of occurrence of failures and temperature measurement errors. Of course, there is a case where such cooling is unnecessary.

As the ultrasonic transceiver element 1, a so-called ultrasonic probe is suitably used. In the present invention, it is particularly preferable to use a vertical probe among ultrasonic probes. It is noted that as the ultrasonic transceiver element 1, it is possible to use an ultrasonic probe of electromagnetic ultrasonic wave type without being limited to an ultrasonic probe of contact type in which a contact medium needs to be interposed between the probe and the mold copper plate C. Moreover, as the ultrasonic transceiver element 1, without being limited to an ultrasonic probe of a type which performs transmission and reception of ultrasonic wave with the same transducer, it is possible to use an ultrasonic probe of a type in which the transmission and the reception of ultrasonic wave are performed by a different transducer.

As the oscillation frequency of the ultrasonic wave U by the ultrasonic transceiver element 1 (ultrasonic probe) increases, the time resolution for ultrasonic echo detection improves and also the resolution of temperature measurement improves. However, when the oscillation frequency is excessively high, the attenuation of the ultrasonic wave U in propagation increases, and thereby the measurement range will be limited. On one hand, when the oscillation frequency is excessively low, the time resolution for echo detection deteriorates, and the resolution of temperature measurement also deteriorates. For this reason, as the ultrasonic transceiver element 1, it is preferable to use an ultrasonic probe having an oscillation frequency (central frequency) of ultrasonic wave of about 1 MHz to 20 MHz. If the entire area (about 900 mm) in the height direction of the mold copper plate C is to be measured, it is desirable to use an ultrasonic probe having an oscillation frequency of about 5 MHz.

If the size of the contact surface of the ultrasonic transceiver element (ultrasonic probe) 1 is too small, the directivity of the ultrasonic wave U to be transmitted will be impaired and the energy of the ultrasonic wave U in propagation will be dispersed. For this reason, the intensity of the ultrasonic echo to be detected decreases, and it becomes unable to detect an ultrasonic echo that is reflected at a remote reflection source R. Moreover, reflection at the groove as the path of mold cooling water, which is typically provided in the mold copper plate C, is likely to occur, and noise echoes will increase.

On one hand, since the thickness of the mold copper plate C is typically about 35 mm to 45 mm, it is meaningless that the contact surface of the ultrasonic transceiver element 1 has a larger size than that of the thickness. Selecting an ultrasonic probe having an excessively large contact surface size will only cause a cost increase. Further, it is meaningless to perform temperature measurement in the range from the surface C2 to be water cooled up to at least about 20 mm therefrom, which corresponds to the depth of the groove, since it is affected by the temperature of the cooling water that flows in the groove. A major part of the energy of the ultrasonic wave U should be propagated to the remaining range from the adjacent surface C1 with the molten steel M up to about 25 mm therefrom.

From the points described above, it is preferable to use an ultrasonic probe whose contact surface has a dimension (a diameter when the contact surface is circular, and a side when the contact surface is rectangular) of 5 to 25 mm as the ultrasonic transceiver element 1.

As shown in Figure 2, the ultrasonic transceiver element 1 relating to the present embodiment is arranged such that 5 to 100 of them (an example of 5 is shown in Figure 2) are placed side by side in the direction of the mold copper plate C on the upper surface of the mold copper plate C. It is noted that although the ultrasonic transceiver elements 1 is preferably placed in plural number in that the temperature measurement area expands in the width direction of the mold copper plate C, it may be placed in single number without necessarily being limited to plural number. Moreover, the placement spot of the ultrasonic transceiver element 1 will not be limited to the upper surface of the mold copper plate C, and as shown by a dotted line in Figure 2A, and it may be placed on the bottom surface or a side surface of the mold copper plate C. That is, as long as the ultrasonic wave U can propagate in the direction substantially in parallel with the adjacent surface C with the molten metal of the mold copper plate C, it is possible to select any placement spot.

The transmission/reception control unit 2 relating to the present embodiment includes a scanning section, a pulser/receiver section, an amplifier section, and an A/D conversion section and is made up of, for example, an appropriate electric circuit.

The scanning section operates to successively switch the ultrasonic transceiver element 1 that transmits/receives ultrasonic wave U among the plurality of ultrasonic transceiver elements 1 (for example, successively switches the ultrasonic transceiver element 1 that supplies a pulse signal from the pulser/receiver section, from the ultrasonic transceiver element 1 disposed one end side in the width direction of the mold copper plate C to the ultrasonic transceiver element 1 disposed on the other end side).

The pulser/receiver section supplies a pulse signal for causing the ultrasonic transceiver element 1 to transmit ultrasonic wave U. Decreasing the period of supplying this pulse signal makes it possible to increase response to temperature change.

Moreover, the pulser/receiver section amplifies the ultrasonic echo (hereafter, appropriately referred to as an "echo signal") that is detected by the ultrasonic transceiver element 1 and converted into an electric signal.

The amplifier section has a function of further amplifying the echo signal outputted from the pulser/receiver section. This amplification factor (gain) is assumed to be variable.

The A/D conversion section performs A/D conversion of the echo signal amplified at the amplifier section.

The ultrasonic transceiver element 1 transmits an ultrasonic wave U inside the mold copper plate C by the pulse signal supplied from the pulser/receiver section of the transmission/reception control unit 2 which has a configuration as described above. Moreover, the ultrasonic transceiver element 1 detects an ultrasonic echo that is reflected at the reflection source R provided inside the mold copper plate C and the bottom surface of the mold copper plate C, and converts it into an electric signal (an echo signal). The echo signal is amplified at the pulser/receiver section and the amplifier section of the transmission/reception control unit 2, thereafter being A/D converted at the A/D conversion section and outputted to the computing control unit 3.

The computing control unit 3 relating to the present embodiment includes a computing section, a control section, and an interface section and is made up of, for example, a personal computer which is installed with software for achieving functions of each of these sections.

The computing section calculates a propagation time of the ultrasonic echo that is reflected at the reflection source R and the bottom surface of the mold copper plate C and detected by the ultrasonic transceiver element 1 based on the echo signal outputted from the transmission/reception control unit 2. The computing section calculates a temperature of the mold copper plate C based on the calculated propagation time of the ultrasonic echo and the temperature dependence of the propagation speed of ultrasonic wave.

The control section achieves a function of controlling the driving of the pulser/receiver section, etc. included in the transmission/reception control unit 2.

The interface section achieves a function of transmitting data (temperature etc. calculated at the computing section) to a higher level system (a process computer as well as a high level computing apparatus etc. that judges a breakout and calculates a quality indicator to be presented to the operator).

Hereafter, more specific examples will be described on the computing contents in the computing section of the computing control unit 3.

The computing section of the computing control unit 3 prestores the distance (for example, the distance L1 to the reflection source R1 shown in Figure 1 described above) from the incident point of ultrasonic wave (the upper surface of the mold copper plate C in the present embodiment) to the reflection source R (including the bottom surface of the mold copper plate C) and a predetermined temperature dependence (a correspondence between the propagation speed and temperature) of the propagation speed of ultrasonic wave in the mold copper plate C.

The computing control unit 3 calculates a propagation time T1 of an ultrasonic echo U1 reflected at the reflection source R1 and detected by the ultrasonic transceiver element 1 for example as shown in Figure 1 based on the echo signal outputted from the transmission/reception control unit 2.

Next, the computing section determines the propagation speed of ultrasonic wave by the following Equation (1) based on the calculated propagation time T1 and the distance L1 from the incident point of ultrasonic wave to the reflection source R1.

$$\text{Propagation speed of ultrasonic wave} = (\text{distance L1 to reflection source R1})$$

$$\times 2/\text{propagation time T1} \qquad (1)$$

Finally, the computing section calculates a temperature of the mold copper plate C based on the propagation speed and the temperature dependence of the propagation speed of ultrasonic wave. The calculated temperature corresponds to an average temperature of a section from the incident point of ultrasonic wave (the upper surface of the mold copper plate C) to the reflection source R1.

Moreover, as shown in Figure 1, when a plurality of reflection sources R are provided in the propagation path of the ultrasonic wave U transmitted from one ultrasonic transceiver element 1, the computing section of the computing control unit 3 can perform the following computing. That is, the computing section can select for example a pair of reflection sources R1 and R2 based on the echo signal outputted from the transmission/reception control unit 2, and calculate the difference $\Delta T12$ (= T2 - T1) between the propagation time T2 of the ultrasonic echo U2 reflected at the reflection source R2 and the propagation time T1 of the ultrasonic echo U1 reflected at the reflection source R1.

Next, the computing section determines the propagation speed of ultrasonic wave by the following Equation (2) based on the calculated propagation time difference $\Delta T12$ and the distance L12 between the reflection sources R1 and R2.

$$\text{Propagation speed of ultrasonic wave} =$$

$$(\text{distance L12 between reflection sources R1 and R2}) \times 2/\text{propagation time difference}$$

$$\Delta T12 \qquad (2)$$

Lastly, the computing section calculates a temperature of the mold copper plate C based on the propagation speed and the temperature dependence of the propagation speed of ultrasonic wave. The calculated temperature corresponds to an average temperature of a section between the reflection sources R1 and R2. Then, by changing a pair of reflection sources (including the bottom surface of the mold copper plate C) to be selected, it is possible to calculate an average temperature of a section between any reflection sources R (including the bottom surface of the mold copper plate C).

As so far described, the computing section of the computing control unit 3 calculates the propagation time of ultrasonic echo based on the echo signal outputted from the transmission/reception control unit 2. The propagation time of this ultrasonic echo corresponds to the elapsing time from the time when ultrasonic wave is made incident to the mold copper plate C to the time when the ultrasonic echo is detected. Because of this, when calculating a propagation time, it is necessary to determine the time when an ultrasonic echo is detected and the time when ultrasonic wave is made incident to the mold copper plate C.

The method for determining the detection time of an ultrasonic echo is exemplified by a zero-cross method as described below. For example, if a vertical probe having an oscillation frequency of 5 MHz is used as the ultrasonic transceiver element 1, an ultrasonic wave U made up of several waves having a central frequency of 5 MHz is transmitted at one pulse signal supplied from the pulser/receiver section of the transmission/reception control unit 2. The ultrasonic echo detected at the ultrasonic transceiver element 1 has a waveform approximately close to the waveform of the ultrasonic wave U at the time of transmission, although there are some changes such as that the central frequency and the number of waves slightly increases decreases when the propagation distance increases. An approximate detection time (hereafter, referred to as an expected detection time) of the ultrasonic echo that is reflected at a specific reflection source R among the echo signals that are A/D converted by the A/D conversion section of the transmission/reception control unit 2 is determined depending on the distance to the reflection source R and the temperature range of the mold copper plate C. For this purpose, a peak of the amplitude of ultrasonic echo is searched in the vicinity of the expected detection time. The peak of the amplitude of ultrasonic echo can be determined as one whose amplitude exceeds a specific threshold value among echo signals in the vicinity of the expected detection time. Then, immediately before or after the peak of amplitude that has exceeded the threshold value, the time when the amplitude of echo signal becomes zero (zero-cross point) is determined. This zero-cross point can be regarded as the detection time of ultrasonic echo.

It is noted that when a zero-cross point is present between sampling points of A/D conversion, the zero-cross point may be determined as an interpolated point of A/D conversion values on both sides of the zero-cross point. Moreover, when peaks exceeding the threshold value are present at a plurality of spots according to the number of waves, it may be decided in advance that for which peak in the plurality of peaks the zero-cross point is determined.

The time when an ultrasonic wave U is made incident to the mold copper plate C can be determined, for example, as the time which is obtained by adding a time delay from a trigger to ultrasonic transmission, or a time delay such as a propagation time of ultrasonic wave within the ultrasonic transceiver element 1, as an offset time to the time when a trigger of ultrasonic transmission (a pulse signal supplied from the pulser/receiver section of the transmission/reception control unit 2) is issued. Moreover, as shown in Figure 1, it is also possible to use a zero-cross point of an ultrasonic echo (a top surface echo) S that is reflected at the top surface (upper surface) of the mold copper plate C, and that occurs when the ultrasonic wave U is made incident to the mold copper plate C, as the time when the ultrasonic wave U is made incident to the mold copper plate C.

It is noted that when determining a temperature of a section between a pair of reflection sources R in the propagation path of ultrasonic wave U to be transmitted from one ultrasonic transceiver element 1, there is no need of accurately determining the time when the ultrasonic wave U is made incident to the mold copper plate C. This is because, as described above, since the propagation time difference between ultrasonic echoes reflected at each reflection source R is used, the time when ultrasonic wave U is made incident to the mold copper plate C is cancelled, and therefore it is only necessary that the detection time of ultrasonic echo is accurately determined.

It is noted that as the method for determining the detection time of ultrasonic echo, for example, a cross-correlation method can be adopted without being limited to the above described zero-cross method.

To be specific, for example, echo signals are collected in advance for the mold copper plate C at a reference temperature in a cold state (when the molten steel M is not being continuously cast), and based on the echo signals in the cold state, a detection time of ultrasonic echo in the cold state is determined (the detection time of ultrasonic echo in the cold state is determined by the zero-cross method). Next, a cross-correlation between the echo signal in the cold state and an echo signal taken for the mold copper plate C while the molten steel M is actually being continuously cast is determined. Then, a time difference at which the determined cross-correlation becomes a maximum is added to the detection time of ultrasonic echo in the cold state to obtain the detection time of ultrasonic echo for the mold copper plate C while the molten steel M is being actually cast.

Since this cross-correlation method can suppress the effect of random noises included in an echo signal compared with the zero-cross method, it is expected that measurement accuracy of the detection time of ultrasonic echo, and thus the accuracy of temperature measurement of the mold copper plate C are improved.

It is noted that the meaning of the above described reference temperature is the same as described before.

As described so far, according to the method and apparatus 100 for temperature measurement of a mold copper plate C for continuous casting relating to the present invention, since the temperature of the mold copper plate C is calculated based on the propagation time of ultrasonic echo that is reflected at a reflection source R provided inside the mold copper plate C, and the temperature dependence (correspondence between the propagation speed and temperature) of the propagation speed of ultrasonic wave, it is possible to measure temperatures (average temperature) of the mold copper plate C everywhere in a propagation path of ultrasonic wave at a time. In other words, it is possible to measure temperatures of the mold copper plate C over a wide range of temperature measurement area by one ultrasonic transceiver element 1.

Moreover, since the ultrasonic wave is caused to propagate in the direction substantially parallel with the adjacent surface C1 with the molten metal M of the mold copper plate C, there is no need of attaching the ultrasonic transceiver element 1 in a surface opposing to the adjacent surface C1. That is, the ultrasonic transceiver element 1 may be attached to any of the upper surface, bottom surface, and side surface of the mold copper plate C excepting the adjacent surface C1 and a surface C2 opposing to the adjacent surface. Therefore, the ultrasonic transceiver element 1 may be disposed separated from the path of mold cooling water, and it is possible to reduce failures of the ultrasonic transceiver element 1 and the occurrence of measurement errors due to water leakage. Moreover, it is less likely that the ultrasonic transceiver element 1 physically interferes with equipment such as an electromagnetic stirring apparatus and an electromagnetic brake apparatus, and when the ultrasonic transceiver element 1 fails, it can be replaced with relative ease, without impairing the productivity of continuous casting.

As so far described, according to the method and apparatus 100 for temperature measurement of a mold copper plate C for continuous casting relating to the present invention, it is possible to measure temperature of the mold copper plate C over a wide range of temperature measurement area with accuracy and without impairing the productivity of continuous casting.

Hereafter, contents and results of the test that the present inventors have made relating to the present invention will be described.

(1) Generally, a mold copper plate for continuous casting is principally composed of Cu (not less than 96 wt%) including small amounts of Co, Ni, or Cr and Zr, and further Ag and P. The present inventors have found that it was possible to cause an ultrasonic wave to be incident from the upper surface of the mold copper plate toward the inside thereof, and cause the ultrasonic wave to propagate to the bottom surface of the mold copper plate which is 900 mm ahead, and detect an ultrasonic echo reflected at the bottom surface. Since the attenuation of ultrasonic wave is large in a copper alloy such as brass, it was not necessarily expected that ultrasonic wave would propagate over such a length.

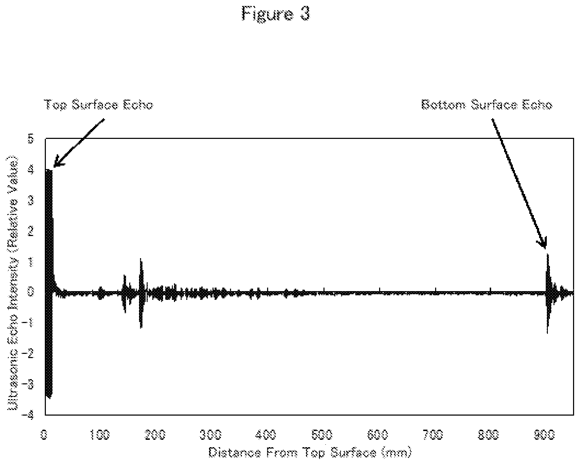

Figure 3 shows an example of an ultrasonic echo when an ultrasonic wave is made incident from the upper surface of the mold copper plate for continuous casting which was used in actual operation. The abscissa of Figure 3 shows values of the propagation distance which is obtained by a conversion from the propagation time of ultrasonic echo based on the sound speed at the normal temperature, and the ordinate of Figure 3 shows the intensity of ultrasonic echo. As shown in Figure 3, a bottom surface echo (an ultrasonic echo that is reflected at the bottom surface of the mold copper plate) which is 900 mm ahead is clearly observed.

From the above described facts, it is seen that it is possible to place an ultrasonic transceiver element (an ultrasonic probe) on the upper surface of the mold copper plate, and observe (measure the temperature of) the entire area of the mold copper plate from the upper surface to the bottom surface located 900 mm ahead with a single ultrasonic transceiver element.

(2) A drill hole having a diameter of 5 mm is provided at a position of 100 mm from the end surface of the mold copper plate for continuous casting to attach a thermocouple in the drill hole, and at least a section from the end surface to a point of 100 mm therefrom of the mold copper plate is heated by a heater. Then, an ultrasonic wave was made incident from an ultrasonic transceiver element placed on the above described end surface, an elapsing time from the time when a top surface echo reflected at the above described end surface was detected to the time when the ultrasonic echo reflected at the above described drill hole was detected was measured, and the elapsing time was assumed to be the propagation time of the ultrasonic echo reflected at the drill hole. Next, the propagation speed of ultrasonic wave was calculated based on the measured propagation time and the propagation distance (about 200 mm) of ultrasonic wave, and based on this propagation speed and a measured temperature value by the thermocouple, the temperature dependence (correspondence between the propagation speed and temperature) of the propagation speed of ultrasonic wave was calculated. It is noted that as the ultrasonic transceiver element, a vertical probe for longitudinal wave having an oscillation frequency of 5 MHz was used. Moreover, the detection times of the top surface echo and the ultrasonic echo reflected at the drill hole were determined by the zero-cross method.

As a result of the above described test, it is seen that the propagation speed of the ultrasonic wave (longitudinal wave) that propagates inside the mold copper plate changes by about -0.7 to -0.4 m/s for a temperature increase of 1 °C of the mold copper plate (a measured temperature value by a thermocouple). Moreover, it is seen that the relationship between the propagation speed and temperature was approximately linear relationship from the normal temperature to about 200 °C. Moreover, the propagation speed of ultrasonic wave (longitudinal wave) in the mold copper plate was about from 4400 m/s to 4900 m/s.

As an example, in a case where two reflection sources are provided at an interval of 100 mm, when an average temperature of a section between the two reflection sources increases by 1 °C at a propagation speed of 4650 m/s of ultrasonic wave, the change in the time during which the ultrasonic wave propagates between the two reflection sources is about 5 nsec ($5 \times 10^{-9}$ sec). Therefore, supposing that A/D conversion is performed at a sampling rate of 100 MHz, since the sampling interval will be 10 nsec, if a zero-cross point can be interpolated at a time resolution of about 1/2 of the sampling interval, then temperature measurement resolution of about 1 °C will be obtained. Moreover, when the time resolution is 1 nsec, it is possible to detect a temperature change of 1 °C between two reflection sources provided at an interval of about 20 mm. Even in the zero-cross method, when the S/N ratio of ultrasonic echo is high, or the cross-correlation method etc. is used, it is possible to obtain this level of time resolution.

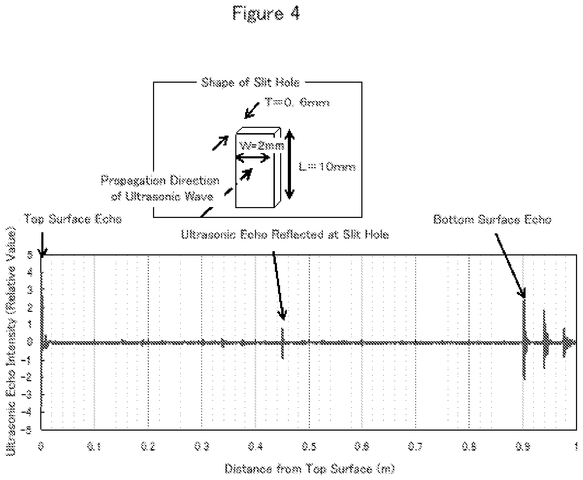

(3) As shown in Figure 4, it was confirmed that an ultrasonic echo that was reflected at a slit hole having a gap T = 0.6 mm, a width W = 2 mm, and a length L = 10 mm provided at a position inside the mold copper plate and 450 mm away from the upper surface of the mold copper plate having a height of 900 mm can be clearly detected.

From this fact, it can be said that by providing a plurality of such small holes in the propagation path of the ultrasonic wave that is transmitted from one ultrasonic transceiver element, it is possible to divide the mold copper plate into a plurality of areas in the propagation direction of ultrasonic wave and to determine an average temperature of each area. In other words, it was confirmed that a concurrent temperature measurement of a plurality of temperature measurement areas was able to be performed with a single ultrasonic transceiver element.

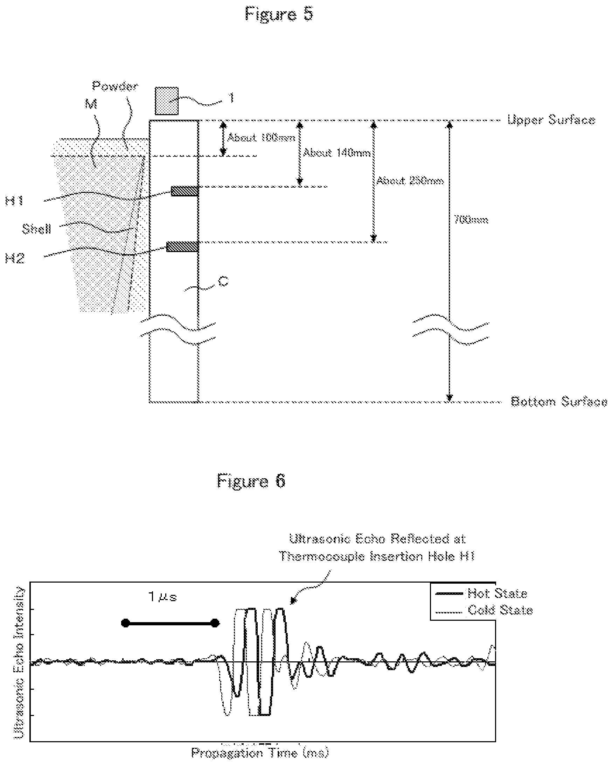

(4) As shown in Figure 5, the method and apparatus for temperature measurement relating to the present invention was used to conduct a test to measure the temperature of the mold copper plate C while molten steel M is actually being continuously cast (however, a continuous casting machine for testing was used). Although the mold copper plate C of the continuous casting machine for testing has a dimensional difference from the mold copper plate which is used for real production (the height of the mold copper plate C used in the present testing was 700 mm), the material and shape thereof are substantially the same.

As the ultrasonic transceiver element 1, a vertical probe (the size of contact surface: diameter of 12 mm) for longitudinal wave having an oscillation frequency of 5 MHz was used. The sampling frequency for A/D conversion of ultrasonic echo was 50 MHz. As the reflection source, a thermocouple insertion hole HI having a diameter of 4 mm provided at a position about 140 mm away from the upper surface of the mold copper plate C was used. At the computing section included in the computing control unit 3 (see Figure 2), an average temperature of the area from the upper surface to a point of 140 mm of the mold copper plate C, an average temperature of an area from the upper surface to the bottom surface, and an average temperature of the area from the point of 140 mm to the bottom surface were calculated. At this time, the detection times of the ultrasonic echoes respectively reflected at the reflection source (the thermocouple insertion hole HI) and the bottom surface of the mold copper plate C were determined by using the zero-cross method. It is noted that concurrently with the temperature measurement by the method relating to the present invention, a first thermocouple was inserted into the above described thermocouple insertion hole HI, and a second thermocouple was inserted into the thermocouple insertion hole H2 having a diameter of 4 mm which was provided at a position 250 mm away from the upper surface of the mold copper plate C so that the temperature of the mold copper plate C was measured by these thermocouples as well.

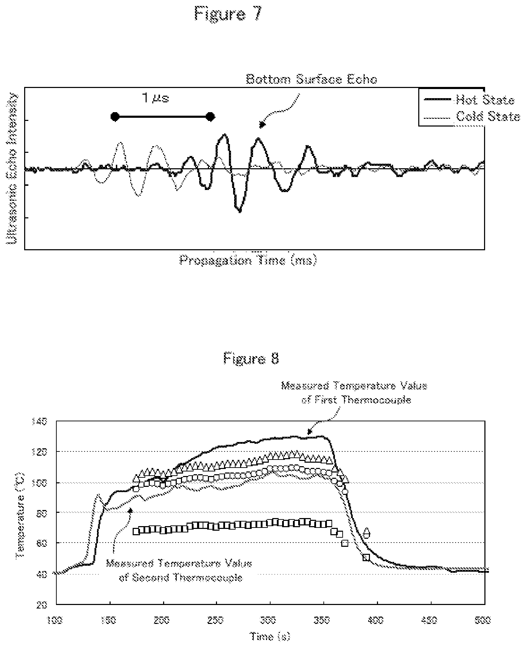

Figures 6 to 8 show the results of the above described test. Figure 6 shows an example of an ultrasonic echo reflected at a thermocouple insertion hole HI as the reflection source, and Figure 7 shows an example of an ultrasonic echo (bottom surface echo) reflected at the bottom surface of the mold copper plate. It is noted that Figures 6 and 7 show an ultrasonic echo during continuous casting (in a hot state), as well as an ultrasonic echo before continuous casting (in a cold state). Further, Figure 8 is a graph to show one examples of each average temperature calculated at the computing section included in the computing control unit 3, as well as temperatures measured by the first and second thermocouples.

As shown in Figure 6, an ultrasonic echo reflected at the thermocouple insertion hole H1 was clearly observable even while continuous casting is carried out. As shown in Figure 7, the same is true with a bottom surface echo.

Moreover, as shown in Figure 8, an average temperature of the area from a point of 140 mm from the upper surface to the bottom surface of the mold copper plate C (the data plotted by "△" in Figure 8), which is calculated at the computing section, and an average temperature of the area from the upper surface to the bottom surface (the data plotted by "○" in Figure 8) indicate values close to the measured temperature values of the first and second thermocouples, and thus it can be said that reasonable results were obtained.

To be more specific, among three average temperatures calculated at the above described computing section, an average temperature of the area from the upper surface to a point of 140 mm of the mold copper plate C (the data plotted by "□" in Figure 8) is significantly affected by the temperature of a low temperature area which is located above the surface of the molten steel M (about 100 mm from the upper surface of the mold copper plate C, see Figure 5), and therefore it is natural that the average temperature is lower than the measured temperature values of the first and second thermocouples, as shown in Figure 8. Therefore, as long as the two average temperatures excepting the average temperature of the area from the upper surface to a point of 140 mm of the mold copper plate C indicate values close to the measured temperature values of the first and second thermocouples, it can be said that the result is reasonable.

**Claims**

1. A method for measuring temperature of a mold copper plate (C) which constitutes a continuous casting mold for molten metal (M), the method comprising:

   a first procedure of providing a reflection source (R) of ultrasonic wave inside the mold copper plate (C);
   a second procedure of causing an ultrasonic wave (U) to propagate in a direction in parallel with an adjacent surface (C1) to molten metal (M) of the mold copper plate (C) from an ultrasonic transceiver element (1) toward the reflection source (R); and
   a third procedure of calculating a temperature of the mold copper plate (C) based on an ultrasonic echo (U1) that is reflected at the reflection source (R) and is detected by the ultrasonic transceiver element (1).

2. The method for measuring temperature of a mold copper plate (C) for continuous casting according to claim 1, wherein the reflection source (R) provided in the first procedure is a hole that opens up on a surface (C2) opposing to an adjacent surface (C1) to the molten metal (M) of the mold copper plate (C) and extends in the mold copper plate(C).

3. The method for measuring temperature of a mold copper plate (C) for continuous casting according to claim 1 or 2, wherein

in the first procedure, a plurality of the reflection sources (R1, R2, R3) are provided in a propagation path of an ultrasonic wave (U) that is transmitted from one or a pair of ultrasonic transceiver elements (1); and

in the third procedure, a temperature of a section of the mold copper plate (C) between an arbitrarily selected pair of reflection sources (R1), R2) among the plurality of the reflection sources (R1, R2, R3) is calculated based on a propagation time difference ($\Delta$T12) between ultrasonic echoes (U1, U2) that are respectively reflected at the selected pair of reflection sources (R1, R2) and on a temperature dependence of a propagation speed of ultrasonic wave.

4. The method for measuring temperature of a mold copper plate (C) for continuous casting according to any one of claims 1 to 3, wherein

in the second procedure, an ultrasonic transceiver element (1) is disposed on an upper surface of the mold copper plate (C).

5. An apparatus for measuring temperature of a mold copper plate (C) which constitutes a continuous casting mold for molten metal (M), the mold copper plate (C) being provided with an ultrasonic reflection source (R) therein, the apparatus comprising:

an ultrasonic transceiver element (1) that causes an ultrasonic wave (U) to propagate in a direction in parallel with an adjacent surface (C1) to molten metal (M) of the mold copper plate (C) toward the reflection source (R); and computing device for calculating a temperature of the mold copper plate (C) based on a propagation time of an ultrasonic echo (U1) that is reflected at the reflection source (R) and is detected by the ultrasonic transceiver element (1) and on a temperature dependence of a propagation speed of ultrasonic wave.

**Patentansprüche**

1. Verfahren zum Messen von Temperatur einer Formkupferplatte (C), die eine Stranggussform für Metallschmelze (M) bildet, wobei das Verfahren Folgendes umfasst:

ein erstes Verfahren eines Bereitstellens einer Relexionsquelle (R) von Ultraschallwellen im Innern der Formkupferplatte (C);

ein zweites Verfahren eines Veranlassens einer Ultraschallwelle (U) dazu, sich in einer Richtung parallel zu einer zu Metallschmelze (M) der Formkupferplatte (C) benachbarten Oberfläche (C1) von einem Ultraschall-Sendeempfängerelement (1) zur Reflexionsquelle (R) auszubreiten; und

ein drittes Verfahren eines Berechnens einer Temperatur der Formkupferplatte (C) auf Grundlage eines Ultraschallechos (U1), das an der Reflexionsquelle (R) reflektiert wird und durch das Ultraschall-Sendeempfängerelement (1) erfasst wird.

2. Verfahren zum Messen von Temperatur einer Formkupferplatte (C) für Stranggießen nach Anspruch 1, wobei die Reflexionsquelle (R), die in dem ersten Verfahren bereitgestellt ist, ein Loch ist, das sich auf einer Oberfläche (C2) öffnet, die einer zur Metallschmelze (M) der Formkupferplatte (C) benachbarten Oberfläche (C1) gegenüberliegt, und sich in die Formkupferplatte (C) erstreckt.

3. Verfahren zum Messen von Temperatur einer Formkupferplatte (C) für Stranggießen nach Anspruch 1 oder 2, wobei im ersten Verfahren eine Vielzahl der Reflexionsquellen (R1, R2, R3) in einem Ausbreitungsweg einer Ultraschallwelle (U) bereitgestellt sind, die von einem oder einem Paar Ultraschall-Sendeempfängerelemente (1) übertragen wird; und

im dritten Verfahren eine Temperatur eines Abschnitts der Formkupferplatte (C) zwischen einem willkürlich ausgewählten Paar Reflexionsquellen (R1), R2) aus der Vielzahl der Reflexionsquellen (R1, R2, R3) auf Grundlage einer Ausbreitungszeitdifferenz ($\Delta$T12) zwischen Ultraschallechos (U1, U2), die jeweils an dem ausgewählten Paar Reflexionsquellen (R1, R2) reflektiert werden, und einer Temperaturabhängigkeit einer Ausbreitungsgeschwindigkeit von Ultraschallwellen berechnet wird.

4. Verfahren zum Messen von Temperatur einer Formkupferplatte (C) für Stranggießen nach einem der Ansprüche 1 bis 3, wobei

im zweiten Verfahren ein Ultraschall-Sendeempfängerelement (1) auf einer oberen Fläche der Formkupferplatte (C) angeordnet ist.

**5.** Vorrichtung zum Messen von Temperatur einer Formkupferplatte (C), die eine Stranggussform für Metallschmelze (M) bildet, wobei die Formkupferplatte (C) mit einer Ultraschallreflexionsquelle (R) darin bereitgestellt ist, wobei die Vorrichtung Folgendes umfasst:

ein Ultraschall-Sendeempfängerelement (1), das eine Ultraschallwelle (U) dazu veranlasst, sich in einer Richtung parallel zu einer zu Metallschmelze (M) der Formkupferplatte (C) benachbarten Oberfläche (C1) zur Reflexionsquelle (R) auszubreiten; und
Recheneinrichtung zum Berechnen einer Temperatur der Formkupferplatte (C) auf Grundlage einer Ausbreitungszeit eines Ultraschallechos (U1), das an der Reflexionsquelle (R) reflektiert wird und durch das Ultraschall-Sendeempfängerelement (1) erfasst wird, und einer Temperaturabhängigkeit einer Ausbreitungsgeschwindigkeit von Ultraschallwellen.

## Revendications

**1.** Procédé de mesure de la température d'une plaque de moule en cuivre (C) qui constitue un moule de coulée continue pour un métal fondu (M), le procédé comprenant

une première procédure de production d'une source de réflexion (R) d'une onde ultrasonore à l'intérieur de la plaque de moule en cuivre (C) ;
une deuxième procédure consistant à amener une onde ultrasonore (U) à se propager dans une direction parallèlement à une surface adjacente (C1) à un métal fondu (M) de la plaque de moule en cuivre (C) depuis un élément émetteur-récepteur d'ultrasons (1) vers la source de réflexion (R) ; et
une troisième procédure de calcul d'une température de la plaque de moule en cuivre (C) en fonction d'un écho ultrasonore (U1) qui est réfléchi au niveau de la source de réflexion (R) et est détecté par l'élément émetteur-récepteur d'ultrasons (1).

**2.** Procédé de mesure de la température d'une plaque de moule en cuivre (C) en vue d'une coulée continue selon la revendication 1, dans lequel
la source de réflexion (R) prévue dans la première procédure est un trou qui s'ouvre sur une surface (C2) opposée à une surface adjacente (C1) au métal fondu (M) de la plaque de moule en cuivre (C) et s'étend dans la plaque de moule en cuivre (C),

**3.** Procédé de mesure de la température d'une plaque de moule en cuivre (C) en vue d'une coulée continue selon la revendication 1 ou 2, dans lequel
dans la première procédure, une pluralité de sources de réflexion (R1, R2, R3) sont produites dans un chemin de propagation d'une onde ultrasonore (U) qui est transmise depuis un élément ou une paire d'éléments émetteur-récepteur d'ultrasons (1) ; et
dans la troisième procédure, une température d'une section de la plaque de moule en cuivre (C) entre une paire sélectionnée de manière arbitraire de sources de réflexion (R1), R2) parmi la pluralité de sources de réflexion (R1, R2, R3) est calculée en fonction d'une différence de temps de propagation ($\Delta$T12) entre des échos ultrasonores (U1, U2) qui sont respectivement réfléchis au niveau de la paire sélectionnée de sources de réflexion (R1, R2) et d'une dépendance thermique d'une vitesse de propagation d'onde ultrasonore.

**4.** Procédé de mesure de la température d'une plaque de moule en cuivre (C) en vue d'une coulée continue selon l'une quelconque des revendications 1 à 3, dans lequel
dans la deuxième procédure, un élément émetteur-récepteur d'ultrasons (1) est disposé sur une surface supérieure de la plaque de moule en cuivre (C).

**5.** Appareil de mesure de la température d'une plaque de moule en cuivre (C) qui constitue un moule de coulée continue pour un métal fondu (M), la plaque de moule en cuivre (C) étant dotée d'une source de réflexion ultrasonore (R) à l'intérieur de celle-ci, l'appareil comprenant :

un élément émetteur-récepteur d'ultrasons (1) qui amène une onde ultrasonore (U) à se propager dans une direction parallèlement à une surface adjacente (C1) à un métal fondu (M) de la plaque de moule en cuivre (C) vers la source de réflexion (R) ; et
un dispositif de calcul permettant de calculer une température de la plaque de moule en cuivre (C) en fonction d'un temps de propagation d'un écho ultrasonore (U1) qui est réfléchi au niveau de la source de réflexion (R) et est détecté par l'élément émetteur-récepteur d'ultrasons (1) et d'une dépendance thermique d'une vitesse de propagation d'une onde ultrasonore.

Figure 1

Figure 2A

100

3

•Computing Section
•Control Section
•Interface Section

•Pulser/Receiver Section
•Scanning Section
•Amplifier Section
•A/D Conversion Section

2

1

5

C

C1

Higher Level System

Monitor

4

Figure 2B

52    53    A    5    11

1    1    1    1    1    51

A

Figure 2C

C2    52    53    52

C

11    1

C1

Figure 3

Figure 4

## Figure 5

## Figure 6

Figure 7

Figure 8

**EP 2 409 795 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002113562 A

- JP 2007033077 A